# EUROPEAN PATENT APPLICATION

(11) **EP 2 897 194 A1**
(43) Date of publication of application: **22.07.2015**
(21) Application number: 13836582.0
(22) Date of filing: 10.09.2013
(51) Int. Cl.: H01M 2/10, H01M 2/20, H01M 2/04

(54) **STACKED TYPE SECONDARY BATTERY**

(30) Priority: 11.09.2012 KR 20120100332; 11.09.2012 KR 20120100336
(71) Applicant: Routejade Inc., Chungcheongnam-do 320-844 (KR)
(72) Inventor: KIM, Kyung Joon, Incheon 407-070 (KR); KIM, In Joong, Nonsan-si Chungcheongnam-do 320-030 (KR); JUNG, Taek Joo, Daejeon 301-720 (KR)
(74) Representative: Von Kreisler Selting Werner - Partnerschaft von Patentanwälten und Rechtsanwälten mbB
(86) International application number: PCT/KR2013/008163
(87) International publication number: WO 2014/042400

(57) **Abstract**

Disclosed is a stacked type secondary battery. A stacked type secondary battery of the present inveniton includes: an electrode assembly including multiple first electrode plates and multiple second electrode plates having the opposite polarity to that of the first electrode plates and stacked alternately with the first electrode plates with separators respectively interposed therebetween; an outer can in which an inner space for accommodating the electrode assembly is formed; an outer cap which is combined with the outer can so as to cover an open side of the outer can; and a conducting polymer film which is positioned between an outermost second electrode plate among the multiple second electrode plates and the outer cap to electrically connect the second electrode plate and the outer cap, or positioned between the outermost second electrode plate and the outer can to electrically connect the second electrode plate and the outer can.

## Description

### [Technical Field]

The present invention relates to a stacked type secondary battery, and more particularly, to a structure configured to electrically connect an electrode plate of an electrode assembly and an outer case in order for the outer case to serve as a terminal.

### [Background Art]

Unlike non-rechargeable primary batteries, secondary batteries can be charged and discharged. A low capacity battery in which a single battery cell is packaged into a pack shape has been used in small portable electronic devices such as cellular phones, notebook computers, and camcorders, while a high capacity battery as a battery pack unit in which multiple battery cells are connected has been widely used in a power source for driving motors in a hybrid automobile.

Such a secondary battery includes a lithium ion secondary battery, a nickelcadmium secondary battery, a nickel-hydrogen secondary battery, a lithium polymer secondary battery, or the like, and a super capacitor, which has recently drawn attention, is also a kind of secondary battery. Further, secondary batteries can be classified into coin-type secondary batteries, prismatic secondary batteries, or the like, depending on an outer shape of a secondary battery.

Typically, a secondary battery may include an electrode assembly in which a cathode plate and an anode plate are laminated or stacked alternately with a separator interposed therebetween, and an outer case including a inner space for accommodating the electrode assembly and made of a metallic material. Further, the secondary battery may further include an adhesive binding tape to be attached to an end or an edge of the electrode assembly such that a laminated or stacked state of the electrode assembly cannot be in disorder, that is, an aligned state of the cathode plate, the separator, and the anode plate constituting the electrode assembly cannot be in disorder.

Meanwhile, an anode plate or a cathode plate at the outermost position of the electrode assembly may be configured to be brought into direct contact with the outer case (an outer cap or an outer can) in order for the outer cap or the outer can to serve as an anode terminal or a cathode terminal.

However, if the electrode plate (the anode plate or the cathode plate) at the outermost position of the electrode assembly is configured to be brought into direct contact with the outer case (the outer cap or the outer can) in order for the outer case to serve as a terminal, the electrode plate cannot be entirely brought into contact with the outer case but may be partially spaced from the outer case due to interference of the binding tape having a predetermined thickness. Such an unstable contact between the electrode plate and the outer case decreases conductivity, resulting in a decrease in performance of the secondary battery. Further, such a problem may occur not only due to the binding tape but also due to any other components present between the electrode plate at the outermost position of the electrode assembly and the outer case.

### [Disclosure]

### [Technical Problem]

An object of the present invention is to provide a stacked type secondary battery including an electrode assembly in which a cathode plate and an anode plate are laminated or stacked alternately with a separator interposed therebetween, and in the stacked type secondary battery, a sufficient conductivity with respect to an electrode plate and an outer case can be stably secured, and, thus, performance of the secondary battery can be improvevd.

### [Technical Solution]

The above-described object can be achieved by a stacked type secondary battery including: an electrode assembly including multiple first electrode plates and multiple second electrode plates having the opposite polarity to that of the first electrode plates and laminated or stacked alternately with the first electrode plates with separators respectively interposed therebetween; an outer can in which an inner space for accommodating the electrode assembly is formed; an outer cap which is combined with the outer can so as to cover an open side of the outer can; and a conducting polymer film which is positioned between an outermost second electrode plate among the multiple second electrode plates and the outer cap to electrically connect the second electrode plate and the outer cap, or positioned between the outermost second electrode plate and the outer can to electrically connect the second electrode plate and the outer can according to the present invention.

The conducting polymer film may have a characteristic of positive temperature coefficient (PTC) in which when a temperature reaches a specific temperature, an electrical resistance value is sharply increased according to an increase in temperature.

The stacked type secondary battery may further include a binding tape to be attached to an edge of the electrode assembly such that a laminated or stacked state of the electrode assembly cannot be in disorder.

The conducting polymer film may be arranged at a central region of the outermost second electrode so as not to be overlapped with the binding tape.

The conducting polymer film may include an opening at a position corresponding to the binding tape so as not to be overlapped with the binding tape.

The conducting polymer film may have a thickness equal to or greater than a thickness of the binding tape.

One surface of the conducting polymer film may be brought into contact with the outermost second electrode plate and the other surface may be brought into contact with the outer cap or the the outer can.

The first electrode plate is a cathode plate coated with a cathode active material, and the second electrode plate is an anode plate coated with an anode active material.

The above-described object can be achieved by a stacked type secondary battery including: an electrode assembly including multiple first electrode plates and multiple second electrode plates having the opposite polarity to that of the first electrode plates and laminated or stacked alternately with the first electrode plates with separators respectively interposed therebetween; an outer can in which an inner space for accommodating the electrode assembly is formed; an outer cap which is combined with the outer can so as to cover an open side of the outer can; and a metal foam which is positioned between an outermost second electrode plate among the multiple second electrode plates and the outer cap to electrically connect the second electrode plate and the outer cap, or positioned between the outermost second electrode plate and the outer can to electrically connect the second electrode plate and the outer can, and has compressibility according to the present invention.

The metal foam may be compressed between the electrode assembly and the outer cap so as to be entirely or partially reduced in thickness, or may be compressed between the electrode assembly and the outer can so as to be entirely or partially reduced in thickness.

The stacked type secondary battery may further include a binding tape to be attached to an edge of the electrode assembly such that a laminated or stacked state of the electrode assembly cannot be in disorder.

The metal foam may be arranged on the outermost second electrode plate so as to cover the binding tape.

The metal foam may have a smaller thickness since a portion overlapped with the binding tape is further compressed than a portion which is not overlapped with the binding tape.

A thickness of the metal foam before compression may be greater than a thickness of the binding tape.

One surface of the metal foam may be brought into contact with the outermost second plate and the other surface may be brought into contact with the outer cap or the outer can.

The first electrode plate may be a cathode plate coated with a cathode active material and the second electrode plate may be an anode plate coated with an anode active material.

The above-described object can be achieved by a stacked type secondary battery including: an electrode assembly including multiple first electrode plates and multiple second electrode plates having the opposite polarity to that of the first electrode plates and laminated or stacked alternately with the first electrode plates with separators respectively interposed therebetween; an outer can in which an inner space for accommodating the electrode assembly is formed; an outer cap which is combined with the outer can so as to cover an open side of the outer can; and a conducting member which is positioned between an outermost second electrode plate among the multiple second electrode plates and the outer cap to electrically connect the second electrode plate and the outer cap, or positioned between the outermost second electrode plate and the outer can to electrically connect the second electrode plate and the outer can according to the present invention.

### [Advantageous Effects]

In a stacked type secondary battery including an electrode assembly in which a cathode plate and an anode plate are laminated or stacked alternately with a separator interposed therebetween according to the present invention, a conducting polymer film is arranged between an electrode plate at the outermost position of the electrode assembly and an outer case and the electrode plate and the outer case are electrically connected by the conducting polymer film, and, thus, even if there are other components (for example, a binding tape) between the electrode plate at the outermost position of the electrode assembly and the outer case, a sufficient conductivity between the electrode plate and the outer case can be stably secured and ultimately, performance of the secondary battery can be improvevd. Herein, in the present invention, the conducting polymer film having a characteristic of positive temperature coefficient (PTC) is adopted, and, thus, if the secondary battery is overheated for some reason and exceeds a range of normal temperature, an electrical resistance value of the conducting polymer film is sharply increased and the electrode plate and the outer case can be electrically isolated. Thus, danger of explosion of the secondary battery caused by overheating can be prevented and ultimately, safety of the secondary battery can be improved.

In a stacked type secondary battery including an electrode assembly in which a cathode plate and an anode plate are laminated or stacked alternately with a separator interposed therebetween according to the present invention, a metal foam is arranged between an electrode plate at the outermost position of the electrode assembly and an outer case and the electrode plate and the outer case are electrically connected by the metal foam, and, thus, even if there are other components (for example, a binding tape) between the electrode plate at the outermost position of the electrode assembly and the outer case, a sufficient conductivity between the electrode plate and the outer case can be stably secured and ultimately, performance of the secondary battery can be improvevd. Herein, in the present invention, the metal foam has a structure which can be compressed between the electrode assembly and the outer case, and, thus, the metal foam can be arranged without interference of other components (for example, a binding tape) between the electrode plate at the outermost position of the electrode assembly and the outer case. As a result, a contact area with respect to the electrode plate and the outer case can be maximized, and, thus, conductivity to the electrode plate and the outer case can be further improved.

### [Description of Drawings]

FIG. 1 is a schematic cross-sectional configuration view provided for describing a configuration of a stacked type secondary battery according to an exemplary embodiment of the present invention;
FIG. 2 is a schematic perspective view of an electrode assembly of the stacked type secondary battery in FIG. 1;
FIG. 3 is a schematic plane view of the electrode assembly in FIG. 2;
FIG. 4 is a schematic front view of the electrode assembly in FIG. 2;
FIG. 5 is a schematic plane view provided for describing a conducting polymer film arranged on the electrode assembly of the stacked type secondary battery in FIG. 1;
FIG. 6 is an enlarged view of a region "A" in FIG. 1;
FIG. 7 and FIG. 8 are schematic cross-sectional configuration view and plane view, respectively, provided for describing a modification example of a conducting polymer film in a stacked type secondary battery according to an exemplary embodiment of the present invention;
FIG. 9 and FIG. 10 are schematic cross-sectional configuration views provided for describing a configuration of a stacked type secondary battery according to another exemplary embodiment of the present invention;
FIG. 11 is a schematic plane view provided for describing a metal foam arranged on the electrode assembly of the stacked type secondary battery in FIG. 9; and FIG. 12 is an enlarged view of a region "A" in FIG. 10.

### [Best Mode]

In order to fully understand operational advantages of the present invention and objects to be attained by embodiments of the present invention, the accompanying drawings illustrating exemplary embodiments of the present invention and details described in the accompandying drawings should be referred to.

Hereinafter, exemplary embodiments of the present invention will be described with reference to the accompanying drawings to explain the present invention in detail. In describing the present invention, detailed description of already known functions or structures will be omitted in order to clarify the gist of the present invention.

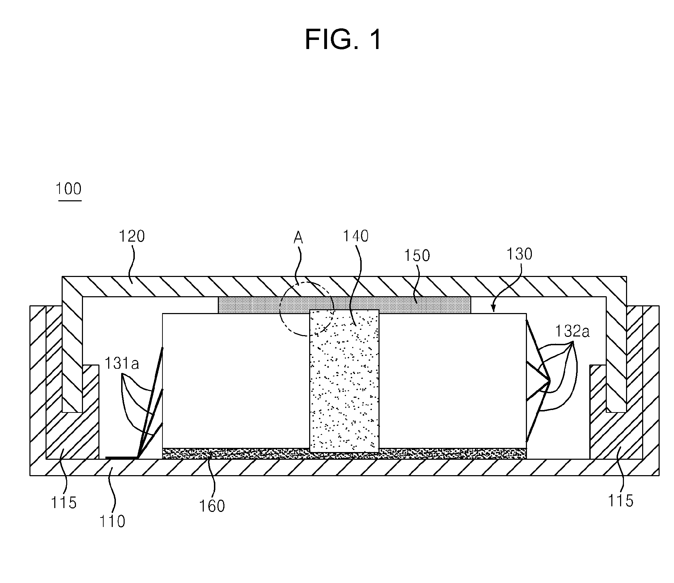

FIG. 1 is a schematic cross-sectional configuration view provided for describing a configuration of a stacked type secondary battery according to an exemplary embodiment of the present invention.

Referring to FIG. 1, a stacked type secondary battery 100 according to the present exemplary embodiment may include outer cases 110 and 120, an electrode assembly 130, a binding tape 140, and a conducting polymer film 150 as a conducting member.

Meanwhile, in the present exemplary embodiment, there will be described an example of a coin-shaped lithium ion secondary battery, but the present invention will not be limited thereto and can be applied to various secondary batteries such as nickelcadmium secondary batteries and nickel-hydrogen secondary batteries as well as other lithium ion secondary batteries having different outer shapes.

The outer cases 110 and 120 may include an outer can 110 in which an inner space for accommodating the electrode assembly 130 is formed and an outer cap 120 which is combined with the outer can 110 to cover an open side of the outer can 110 as illustrated in FIG. 1. Herein, the outer can 110 and the outer cap 120 may be made of a metallic material such as stainless steel so as to serve as an anode terminal or a cathode terminal. The outer can 110 and the outer cap 120 may be electrically insulated by a gasket 115 made of an insulating synthetic resin as illustrated in FIG. 1. In combining the outer can 110 and the outer cap 120, the outer cases 110 and 120 sealed by crimping or caulking may be provided. In a state where the electrode assembly 130 is accommodated, an electrolyte solution may be injected into the outer cases 110 and 120. Meanwhile, in the present example embodiment, it is disclosed that the outer cases 110 and 120 has a flat coin shape, but a shape of the outer cases 110 and 120 can be appropriately modified.

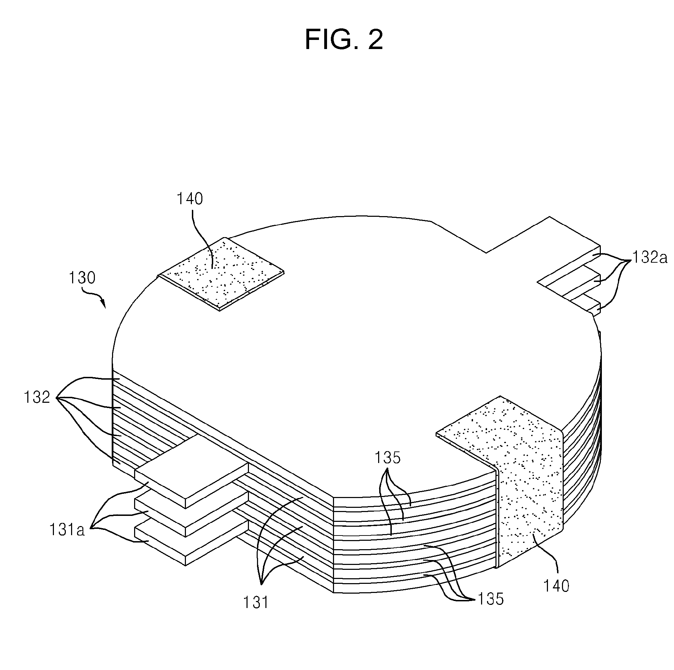

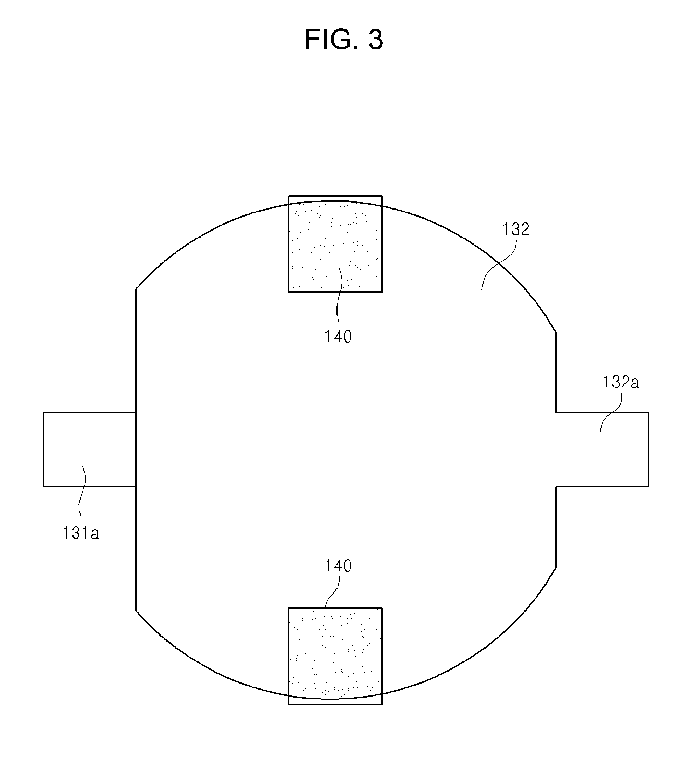

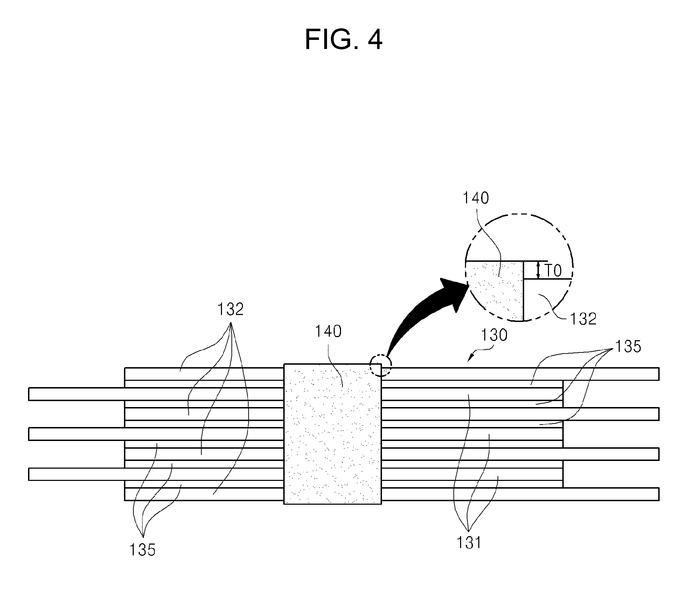

FIG. 2 is a schematic perspective view of an electrode assembly of the stacked type secondary battery in FIG. 1, FIG. 3 is a schematic plane view of the electrode assembly in FIG. 2, and FIG. 4 is a schematic front view of the electrode assembly in FIG. 2.

Referring to FIG. 1 to FIG. 4, the electrode assembly 130 may include multiple first electrode plates 131 and multiple second electrode plates 132 having the opposite polarity to that of the first electrode plates 131 and laminated or stacked alternately with the first electrode plates 131 with separators 135 respectively interposed therebetween. That is, the electrode assembly 130 may have a structure in which the first electrode plate 131, the separator 135, and the second electrode plate 132 are laminated or stacked in sequence. In the following description, the first electrode plate 131 will be limited to a cathode plate coated with a cathode active material, and the second electrode plate 132 will be limited to an anode plate coated with an anode active material. On the contrary to this, in the present invention, the first electrode plate 131 may be provided as an anode plate coated with an anode active material and the second electrode plate 132 may be provided as a cathode plate coated with a cathode active material.

On all of the outermost positions (both ends in a stacked direction) of the electrode assembly 130, the anode plates 132 may be arranged as illustrated in FIG. 4. However, on one of the outermost positions of the electrode assembly 130, the anode plate 132 may be arranged, and on the other one, the cathode plate 131 may be arranged.

Meanwhile, for simplicity in the accompanying drawings, the electrode assembly 130 is illustrated as having a structure in which the three cathode plates 131 and the four anode plates 132 are laminated or stacked into three stages. However, actually, 10 or more laminated or stacked stages may be adopted in most cases. The present invention is not limited to the number of laminated or stacked stages.

The cathode plate 131 may be prepared by applying or coating a cathode active material such as lithium cobalt oxide on both surfaces of a substantially circular aluminum thin plate. The cathode plate 131 includes a cathode protrusion 131 a extended in one direction as illustrated in FIG. 2 to FIG. 4, and the cathode protrusions 131a are arranged as one unit and electrically connected to an inner bottom surface of the outer can 110 by way of ultrasonic welding as illustrated in FIG. 1. Thus, the outer can 110 can serve as a cathode terminal. Herein, the cathode protrusion 131a is not coated with the cathode active material and is exposed from the separator 135.

Like the cathode plate 131, the anode plate 132 may be prepared by applying or coating an anode active material such as graphite on one or both surfaces of a substantially circular copper thin plate. To be specific, the both surfaces of the anode plate 132 except the anode plate 132 at the outermost positions of the electrode assembly 130, that is, both ends in the vertical direction in FIG. 4 are coated with the anode active material. Further, as for the anode plate 132 at the uppermost position of the electrode assembly 130, only a lower surface thereof is coated with the anode active material, and as for the anode plate 132 at the lowermost position of the electrode assembly 130, only an upper surface thereof is coated with the anode active material. Herein, between a lower surface of the anode plate 132 at the lowermost position of the electrode assembly 130 and the inner bottom surface of the outer can 110, an insulating seal 160 is arranged as illustrated in FIG. 1, so that the outer can 110 and the anode plate 132 can be insulated from each other. Herein, the insulating seal 160 may be provided as having a tape structure made of polyethylene terephthalate (PET) or polyamide. Meanwhile, as illustrated in FIG. 2 to FIG. 4, the anode plate 132 includes an anode protrusion 132a extended in the opposite direction to the cathode protrusion 131 a, and the anode protrusions 132a are arranged as one unit and electrically connected by way of ultrasonic welding as illustrated in FIG. 1. Herein, the anode protrusion 132a is not coated with the anode active material and is exposed from the separator 135.

The separator 135 may be arranged between the cathode plate 131 and the anode plate 132 as illustrated in FIG. 4. The separator 135 is a means for insulating between the cathode plate 131 and the anode plate 132 and is typically formed of a microporous thin film made of polyethylene having an excellent insulating property so as to allow lithium ions to pass through. Meanwhile, in the present exemplary embodiment, the separator 135 is simply arranged between the cathode plate 131 and the anode plate 132. Otherwise, there may be provided a cathode plate manufactured by a so-called "pocketing technique" by which the separator 135 is bonded and fixed to an insulating polymer film (not illustrated) in a state where the separator 135 covers both surfaces of the cathode plate 131. For reference, such a pocketing technique is disclosed in detail in Korean Patent No. 10-0393484 and Korean Patent No. 10-1048690.

The binding tape 140 may be attached to an end or an edge of the electrode assembly 130 such that a laminated or stacked state of the electrode assembly 130 cannot be in disorder, as illustrated in FIG. 1 to FIG. 4. That is, the binding tape 140 is a means for binding the electrode assembly 130 such that an aligned state of the cathode plate 131, the separator 135, and the anode plate 132 constituting the electrode assembly 130 cannot be in disorder. The binding tape 140 may be made of polypropylene or the like having an excellent chemical resistance. To be specific, the binding tape 140 may be attached to the electrode assembly 130 in a state where two binding tapes are arranged at the edges of the electrode assembly 130 between the cathode protrusions 131a and the anode protrusions 132a so as to wrap the outer periphery of the electrode assembly 130 in a direction perpendicular to the extended direction of the cathode/anode protrusions 131a and 132a as illustrated in FIG. 2 and FIG. 3. Herein, the binding tape 140 may be made of polypropylene or the like having an excellent chemical resistance. In the present invention, the number and attached positions of the binding tapes 140 are not limited to the description of the present exemplary embodiment and can be appropriately modified.

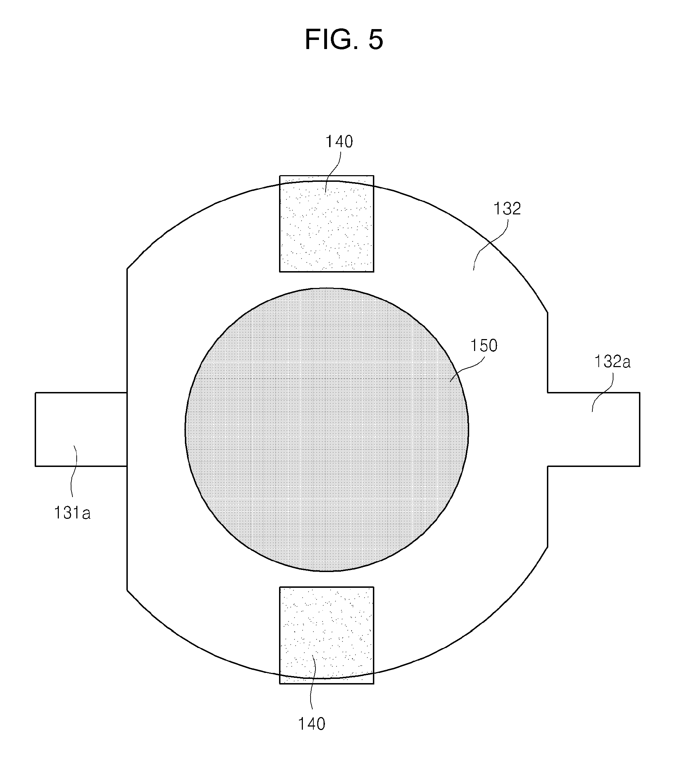

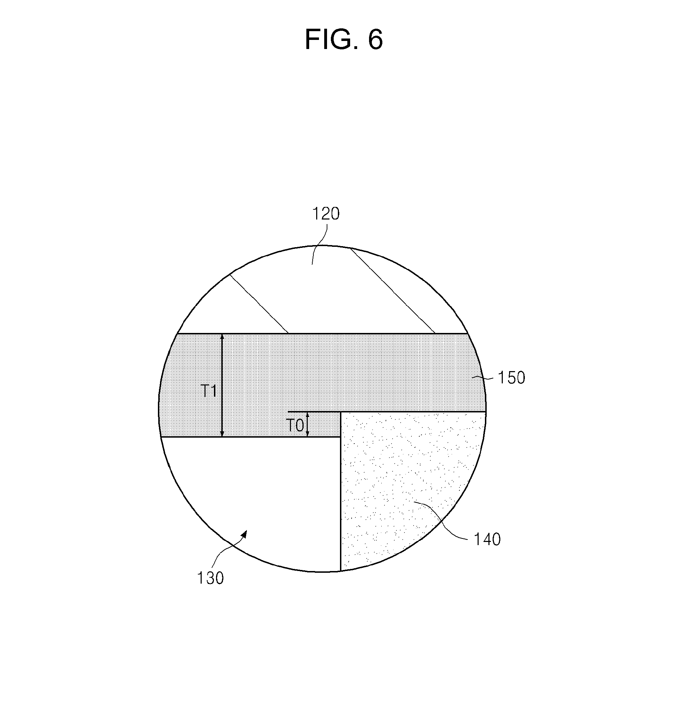

FIG. 5 is a schematic plane view provided for describing a conducting polymer film arranged on the electrode assembly of the stacked type secondary battery in FIG. 1, and FIG. 6 is an enlarged view of a region "A" in FIG. 1.

Referring to FIG. 1 to FIG. 6, the conducting polymer film 150 as a conducting member is arranged between the outermost anode plate 132 (that is, the anode plate 132 arranged on the uppermost end of the electrode assembly 130 in FIG. 4) among the multiple anode plates 132 and the outer cap 120 so as to electrically connect the anode plate 132 with the outer cap 120. Thus, the outer cap 120 can serve as an anode terminal. The conducting polymer film 150 may be configured such that one surface (lower surface) thereof can be brought into contact with the outermost anode plate 132 and the other surface (upper surface) thereof can be brought into contact with the outer cap 120 as illustrated in FIG. 1.

Herein, the conducting polymer film 150 is typically formed of a conducting polymer which has a high conductivity by doping electron acceptors or electron donors to a polymer, and representatively, the conducting polymer may include doped polyethylene, polypyrrole, polythiophene, or the like.

Conventionally, the anode plate 132 at the outermost position of the electrode assembly 130 is configured to be brought into direct contact with the outer cap 120 such that the outer cap 120 can serve as an anode terminal, but in this case, as illustrated in FIG. 4, the anode plate 132 cannot be entirely brought into contact with the outer cap 120 but may be partially spaced from the outer cap 120 due to interference of the binding tape 140 having a predetermined thickness T0. Such an unstable contact between the anode plate 132 and the outer cap 120 decreases conductivity, resulting in a decrease in performance of the secondary battery.

In the present invention, in order to solve the conventional problem described above, the conducting polymer film 150 is arranged between the outermost anode plate 132 and the outer cap 120 so as to electrically connect the anode plate 132 and the outer cap 120. Thus, a sufficient conductivity with respect to the anode plate 132 and the outer cap 120 can be stably secured and performance of the secondary battery can be improvevd.

To be specific, the conducting polymer film 150 may be arranged at a central region of the anode plate 132 so as not to be overlapped with the binding tape 140 attached to the edge of the electrode assembly 130 as illustrated in FIG. 1 and FIG. 5. Therefore, the conducting polymer film 150 can stably maintain a contact with the outermost anode plate 130 and the outer cap 120 without interference of the binding tape 140. Further, in order to secure a more stable contact, preferably, the conducting polymer film 150 may have a thickness T1 greater than, at least equal to, the thickness T0 of the binding tape 140 as illustrated in FIG. 1 and FIG. 6. Meanwhile, FIG. 5 illustrates that the conducting polymer film 150 is illustrated as having a circular plate shape, but the present invention is not limited thereto, and a plate surface shape of the conducting polymer film 150 can be appropriately modified.

Meanwhile, the conducting polymer film 150 may have a characteristic of positive temperature coefficient (PTC). That is, the conducting polymer film 150 can be manufactured into a polymer-based PTC device or a PCT polymer which has been recently used for overcurrent, overheating protection in various circuits. Herein, the characteristic of the positive temperature coefficient (PTC) refers to a characteristic in which when a temperature reaches a specific temperature, an electrical resistance value is sharply increased according to an increase in temperature. As such, if the secondary battery 100 is in a range of normal operational temperature, the conducting polymer film 150 having the characteristic of the positive temperature coefficient (PTC) secures a stable conductivity by electrically connecting the anode plate 132 and the outer cap 120, whereas if the secondary battery 100 is overheated for some reason and out of the normal operational temperature, an electrical resistance value is sharply increased, and, thus, the anode plate 132 and the outer cap 120 can be electrically isolated. Thus, the present invention can prevent danger of explosion of the secondary battery 100 caused by overheating and resultantly improve safety of the secondary battery 100.

Meanwhile, in the present exemplary embodiment, there has been described a configuration in which the anode plates 132 are arranged at the outermost positions (both ends in the stacked direction) of the electrode assembly 130 and the conducting polymer film 150 is arranged between the anode plate 132 at the outermost position (the uppermost end side in FIG. 4) and the outer cap 120, but the present invention is not limited thereto. For example, the cathode plates 131 may be arranged at the outermost positions of the electrode assembly 130 and the conducting polymer film 150 may be arranged between the cathode plate 131 at the outermost position and the outer cap 120, or the conducting polymer film 150 may be arranged between the cathode plate 131 at the other outermost position and the outer can 110.

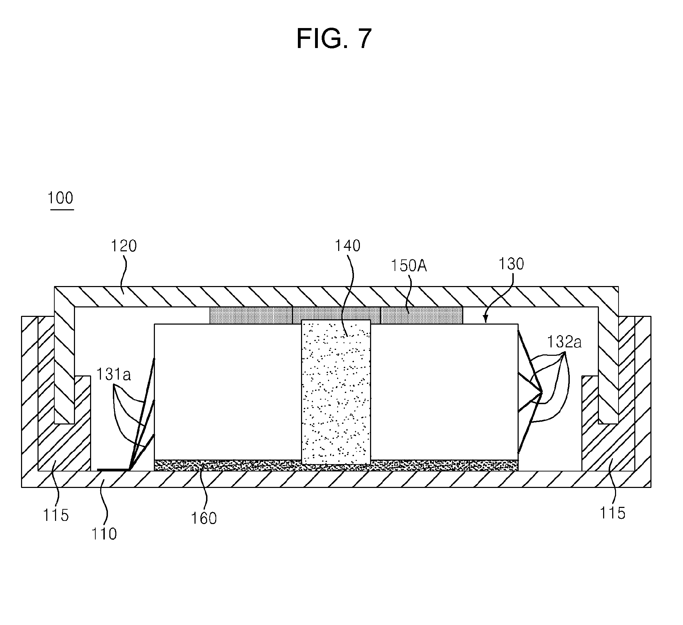

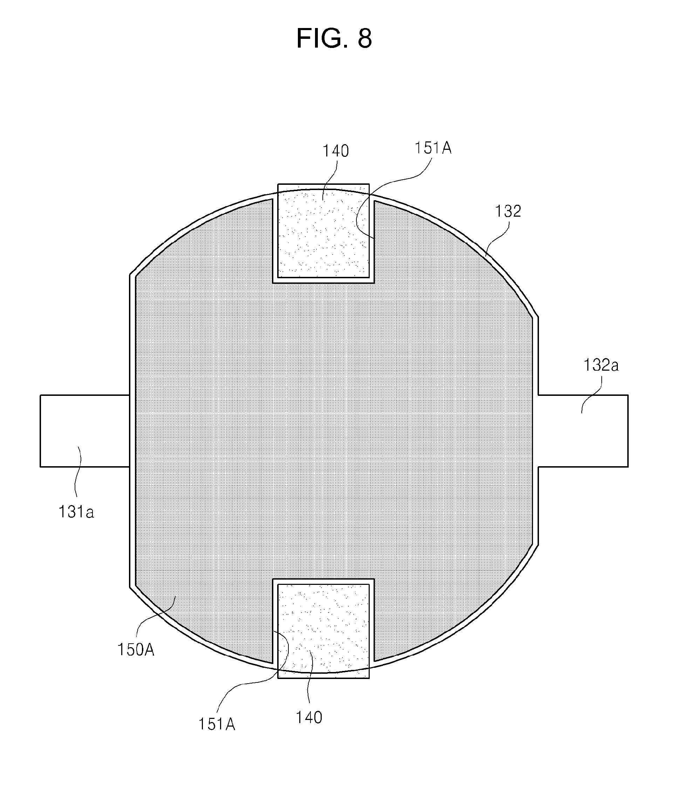

FIG. 7 and FIG. 8 are schematic cross-sectional configuration view and plane view, respectively, provided for describing a modification example of a conducting polymer film in a stacked type secondary battery according to an exemplary embodiment of the present invention.

Referring to FIG. 7 and FIG. 8, a conducting polymer film 150A is arranged on almost the entire region of the anode plate 132 unlike the conducting polymer film 150 arranged only at a central region of the anode plate 132 as illustrated in FIG. 1 and FIG. 5, and may include openings 151A at positions corresponding to the binding tape 140 as illustrated in FIG. 8 so as not to be overlapped with the binding tape 140.

The conducting polymer film 150A having such a configuration can avoid interference of the binding tape 140 like the conducting polymer film 150 illustrated in FIG. 1 and FIG. 5 and also increase a contact area with respect to the anode plate 132 and the outer cap 120 as compared with the above-described conducting polymer film 150, and, thus, can further improve conductivity with respect to the anode plate 132 and the outer cap 120. Meanwhile, a shape of the opening 151A of the conducting polymer film 150A is not limited to the square shape illustrated in FIG. 8 and can be appropriately modified.

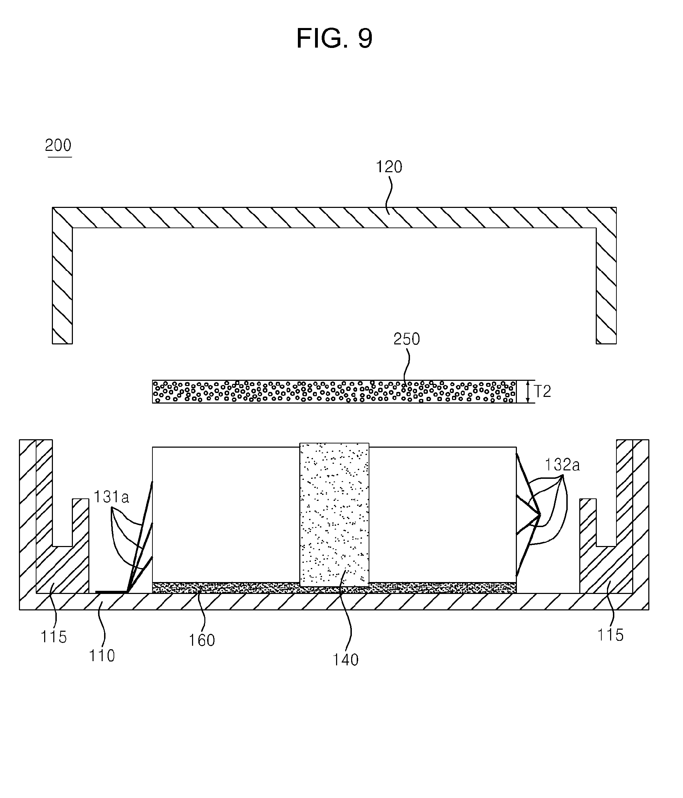

Hereinafter, referring to FIG. 9 to FIG. 12, a stacked type secondary battery according to another exemplary embodiment of the present invention will be described on the basis of differences from the above-described exemplary embodiment.

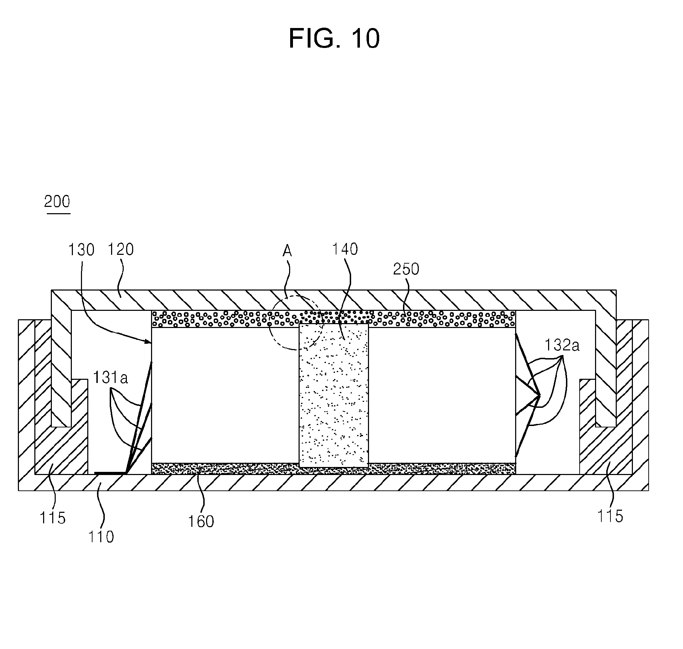

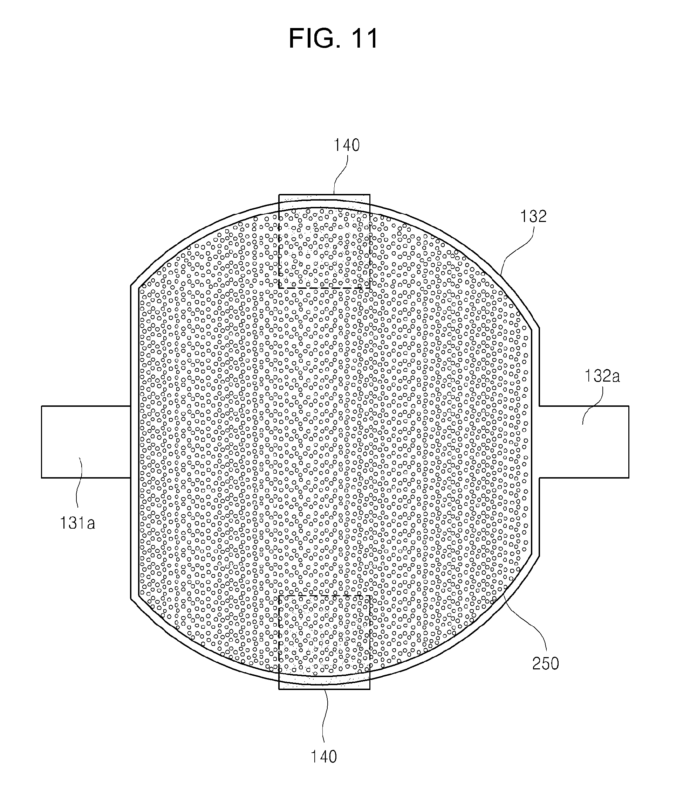

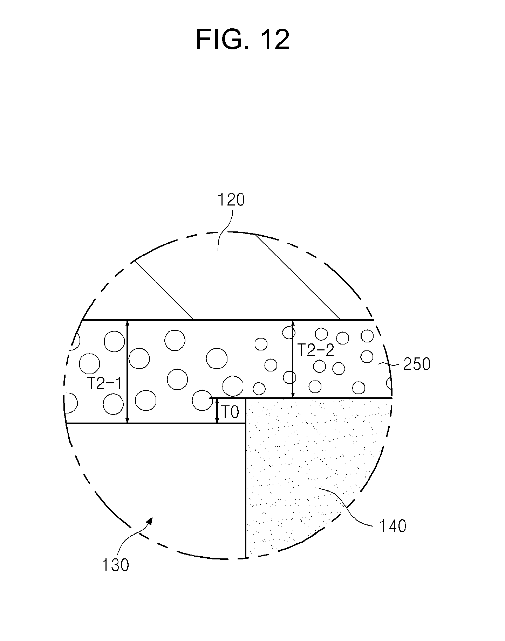

FIG. 9 and FIG. 10 are schematic cross-sectional configuration views provided for describing a configuration of a stacked type secondary battery according to another exemplary embodiment of the present invention, FIG. 11 is a schematic plane view provided for describing a metal foam arranged on the electrode assembly of the stacked type secondary battery in FIG. 9, and FIG. 12 is an enlarged view of a region "A" in FIG. 10.

Referring to FIG. 9 to FIG. 12, a stacked type secondary battery 100 according to the present exemplary embodiment may include the outer cases 110 and 120, the electrode assembly 130, the binding tape 140, and a metal foam 250 as a conducting member. Herein, the outer cases 110 and 120 may include the outer can 110 in which an inner space for accommodating the electrode assembly 130 is formed and the outer cap 120 which is combined with the outer can 110 to cover an open side of the outer can 110.

The stacked type secondary battery 100 according to the present exemplary embodiment has substantially the same components including the outer cases 110 and 120, the electrode assembly 130, and the binding tape 140 as the stacked type secondary battery 100 according to the above-described exemplary embodiment except that the conducting polymer film 150 in the stacked type secondary battery 100 according to the above-described exemplary embodiment is substituted with the metal foam 250. The same components are respectively assigned the same reference numerals, and the above-described exemplary embodiment may apply in describing them.

Referring to FIG. 9 to FIG. 12, the metal foam 250 as a conducting member is arranged between the outermost anode plate 132 among the multiple anode plates 132 and the outer cap 120 so as to electrically connect the anode plate 132 with the outer cap 120. Thus, the outer cap 120 can serve as an anode terminal. The metal foam 250 may be configured such that one surface (lower surface) thereof can be brought into contact with the outermost anode plate 132 and the other surface (upper surface) thereof can be brought into contact with the outer cap 120 as illustrated in FIG. 9 and FIG. 10.

Herein, the metal foam is a porous metal structure or an intumescent metal structure and is made of a metallic material such as aluminum, nickel, copper, brass, iron, and has been used in after-treatment for vehicles/ships, industrial catalytic chemical processes, industrial pads, industrial filters, home filters, or the like. Since the metal foam 250 is made of a metallic material, it has conductivity. Since the metal foam 250 has a porous structure having numerous pores, it has compressibility, and, thus, can be compressed when an external force is applied. In the present exemplary embodiment, the metal foam made of nickel, a so-called nickel foam (Ni foam), is used, but the present invention is not limited thereto.

Conventionally, the anode plate 132 at the outermost position of the electrode assembly 130 is configured to be brought into direct contact with the outer cap 120 such that the outer cap 120 can serve as an anode terminal, but in this case, as illustrated in FIG. 12, the anode plate 132 cannot be entirely brought into contact with the outer cap 120 but may be partially spaced from the outer case 120 due to interference of the binding tape 140 having the predetermined thickness T0. Such an unstable contact between the anode plate 132 and the outer cap 120 decreases conductivity, resulting in a decrease in performance of the secondary battery.

In the present invention, in order to solve the conventional problem described above, the metal foam 250 is arranged between the outermost anode plate 132 and the outer cap 120 so as to electrically connect the anode plate 132 and the outer cap 120. Thus, a sufficient conductivity with respect to the anode plate 132 and the outer case 120 can be stably secured and performance of the secondary battery can be improvevd.

In particular, the metal foam 250 can be compressed between the electrode assembly 130 and the outer cap 120 and thus can be entirely or partially reduced in thickness since the metal foam 250 has a porous structure having numerous pores. For example, before the metal foam 250 is compressed, the metal foam 250 has an initial thickness T2 as illustrated in FIG. 9, whereas in a state where the metal foam 250 is compressed between the electrode assembly 130 and the outer cap 120, the metal foam 250 may have a thickness T2-1, T2-2 as illustrated in FIG. 10 and FIG. 12 smaller than the thickness T2 before the metal foam 250 is compressed. Thus, the metal foam 250 can be arranged without interference of the binding tape 140 attached to the edge of the electrode assembly 130. As a result, a contact area with respect to the anode plate 132 and the outer cap 120 can be maximized, and, thus, conductivity with respect to the anode plate 132 and the outer cap 120 can be further improved.

To be specific, the metal foam 250 may be arranged on the outermost anode plate 132 so as to cover the binding tape 140 attached to the edge of the electrode assembly 130 as illustrated in FIG. 10 and FIG. 11. In this case, the thickness T2 of the metal foam 250 before compression needs to be greater than the thickness T0 of the binding tape 140 because if the thickness T2 of the metal foam 250 before compression is smaller than the thickness T0 of the binding tape 140, the metal foam 250 may be spaced from the anode plate 132 at a portion where the metal foam 250 is not overlapped with the binding tape 140.

As such, even if the metal foam 250 is arranged so as to cover the binding tape 140, the metal foam 250 can be compressed between the electrode assembly 130 and the outer cap 120 as described above. Thus, the metal foam 250 is not spaced from the anode plate 132 or the outer cap 132 and can stably maintain a contact as a whole. Herein, as illustrated in FIG. 10 and FIG. 12, the thickness T2-2 of a portion where the metal foam 250 is overlapped with the binding tape 140 may be smaller than the thickness T2-1 of the portion where the metal foam 250 is not overlapped with the binding tape 140. That is, the portion where the metal foam 250 is overlapped may be further compressed than the portion where the metal foam 250 is not overlapped with the binding tape 140 and thus may a smaller thickness. Further, preferably, the metal foam 250 may be prepared in a size and shape which can cover all the regions of the anode plate 132 except the anode protrusion 132a as illustrated in FIG. 11 in order to maximize a contact area with respect to the anode plate 132 and the outer cap 120 and thus further improve conductivity with respect to the anode plate 132 and the outer cap 120.

However, unlike the description of the present exemplary embodiment, the metal foam 250 may be arranged only at a central region of the anode plate 132 so as not to be overlapped with the binding tape 140 attached to the edge of the electrode assembly 130 or may include openings at positions corresponding to the binding tape 140 so as not to be overlapped with the binding tape 140. Further, a shape of the metal foam 250 is not limited to the shape illustrated in FIG. 11 and can be appropriately modified.

Meanwhile, in the present exemplary embodiment, there has been described a configuration in which the anode plates 132 are arranged at the outermost positions (both ends in the stacked direction) of the electrode assembly 130 and the metal foam 250 is arranged between the anode plate 132 at the outermost position and the outer cap 120, but the present invention is not limited thereto. For example, the cathode plates 131 may be arranged at the outermost positions of the electrode assembly 130 and the metal foam 50 may be arranged between the cathode plate 131 at the outermost position and the outer cap 120, or the metal foam 250 may be arranged between the cathode plate 131 at the other outermost position and the outer can 110.

The present invention is not limited to the above-described exemplary embodiments, and it is obvious to those skilled in the art that various modifications and changes can be made without departing from the concept and scope of the present invention. Therefore, it should be noted that such modifications or changes will be construed as being included in the claims of the present invention.

The present invention can be used for various secondary batteries such as nickelcadmium batteries and nickel-hydrogen batteries.

## Claims

1. A stacked type secondary battery comprising:
an electrode assembly including multiple first electrode plates and multiple second electrode plates having the opposite polarity to that of the first electrode plates and stacked alternately with the first electrode plates with separators respectively interposed therebetween;
an outer can in which an inner space for accommodating the electrode assembly is formed;
an outer cap which is combined with the outer can so as to cover an open side of the outer can; and
a conducting polymer film which is positioned between an outermost second electrode plate among the multiple second electrode plates and the outer cap to electrically connect the second electrode plate and the outer cap, or positioned between the outermost second electrode plate and the outer can to electrically connect the second electrode plate and the outer can.

2. The stacked type secondary battery of claim 1, wherein the conducting polymer film has a characteristic of positive temperature coefficient (PTC) in which when a temperature reaches a specific temperature, an electrical resistance value is sharply increased according to an increase in temperature.

3. The stacked type secondary battery of claim 1, further comprising:
a binding tape to be attached to an edge of the electrode assembly such that a stacked state of the electrode assembly is not in disorder.

4. The stacked type secondary battery of claim 3, wherein the conducting polymer film is arranged at a central region of the outermost second electrode so as not to be overlapped with the binding tape.

5. The stacked type secondary battery of claim 3, wherein the conducting polymer film includes an opening at a position corresponding to the binding tape so as not to be overlapped with the binding tape.

6. The stacked type secondary battery of claim 3, wherein the conducting polymer film has a thickness equal to or greater than a thickness of the binding tape.

7. The stacked type secondary battery of claim 1, wherein one surface of the conducting polymer film is brought into contact with the outermost second electrode plate and the other surface is brought into contact with the outer cap or the the outer can.

8. The stacked type secondary battery of claim 1, wherein the first electrode plate is a cathode plate coated with a cathode active material, and the second electrode plate is an anode plate coated with an anode active material.

9. A stacked type secondary battery comprising:
an electrode assembly including multiple first electrode plates and multiple second electrode plates having the opposite polarity to that of the first electrode plates and stacked alternately with the first electrode plates with separators respectively interposed therebetween;
an outer can in which an inner space for accommodating the electrode assembly is formed;
an outer cap which is combined with the outer can so as to cover an open side of the outer can; and
a metal foam which is positioned between an outermost second electrode plate among the multiple second electrode plates and the outer cap to electrically connect the second electrode plate and the outer cap, or positioned between the outermost second electrode plate and the outer can to electrically connect the second electrode plate and the outer can, and has compressibility.

10. The stacked type secondary battery of claim 9, wherein the metal foam is compressed between the electrode assembly and the outer cap so as to be entirely or partially reduced in thickness, or compressed between the electrode assembly and the outer can so as to be entirely or partially reduced in thickness.

11. The stacked type secondary battery of claim 9, further comprising:
a binding tape to be attached to an edge of the electrode assembly such that a stacked state of the electrode assembly is not in disorder.

12. The stacked type secondary battery of claim 11, wherein the metal foam is arranged on the outermost second electrode plate so as to cover the binding tape.

13. The stacked type secondary battery of claim 12, wherein the metal foam has a smaller thickness since a portion overlapped with the binding tape is further compressed than a portion which is not overlapped with the binding tape.

14. The stacked type secondary battery of claim 11, wherein a thickness of the metal foam before compression is greater than a thickness of the binding tape.

15. The stacked type secondary battery of claim 9, wherein one surface of the metal foam is brought into contact with the outermost second plate and the other surface is brought into contact with the outer cap or the outer can.

16. The stacked type secondary battery of claim 9, wherein the first electrode plate is a cathode plate coated with a cathode active material and the second electrode plate is an anode plate coated with an anode active material.

17. A stacked type secondary battery comprising:
an electrode assembly including multiple first electrode plates and multiple second electrode plates having the opposite polarity to that of the first electrode plates and stacked alternately with the first electrode plates with separators respectively interposed therebetween;
an outer can in which an inner space for accommodating the electrode assembly is formed;
an outer cap which is combined with the outer can so as to cover an open side of the outer can; and
a conducting member which is positioned between an outermost second electrode plate among the multiple second electrode plates and the outer cap to electrically connect the second electrode plate and the outer cap, or positioned between the outermost second electrode plate and the outer can to electrically connect the second electrode plate and the outer can.
